# EUROPEAN PATENT SPECIFICATION

(11) **EP 2 720 904 B1**
(45) Date of publication and mention of the grant of the patent: **27.04.2016**
(21) Application number: 11755153.1
(22) Date of filing: 16.06.2011
(51) Int. Cl.: B60P 3/08, B60P 3/12

(54) **LOADING FLATBED FOR TRANSPORTING VEHICLES**
LADEFLACHBETT ZUM TRANSPORT VON FAHRZEUGEN
PLATE-FORME DE CHARGEMENT POUR TRANSPORTER DES VÉHICULES

(43) Date of publication of application: 23.04.2014
(73) Proprietor: Rolfo S.p.A., 12042 Bra (CN) (IT)
(72) Inventor: ARNULFO, Elio, I-12042 Bra (CN) (IT)
(74) Representative: Garavelli, Paolo
(86) International application number: PCT/IT2011/000201
(87) International publication number: WO 2012/172578

(56) References cited:
- EP-A1- 1 661 756
- DE-U1- 20 003 310
- NL-A- 7 307 677
- US-A- 2 492 829
- US-A- 3 104 127
- US-A- 4 369 008

## Description

The present invention refers to a loading flatbed for transporting vehicles, in particular for refurbishing a trailer or a semitrailer.

Various types of trucks, trailers and semitrailers are known in the art, refurbished according to various configurations through vehicle structures that allow transporting vehicles on loading flatbeds, such as for example in case of motor vehicle-transporting trucks. Obviously, such structures must have such sizes as to allow the maximum transporting capacity, though complying with the size limits imposed by the laws.

In general, see, for example US3104127, such flatbeds are composed of one or more platforms, possibly capable of being handled through the most suitable actuating means, bearing on a supporting structure composing the chassis of the truck, trailer or semitrailer. Under such circumstances, the height limitations become critical and usually allow, on the same flatbed, loading the vehicles in line, consequently limiting the loading capacity, obviously due to length constraints imposed by the various Rules of the Road, and a more efficient arrangement of the vehicles on such flatbeds, above all in case of big-sized vehicles such as SUV or off-road vehicles.

Therefore, object of the present invention is solving the above prior art problems by providing a loading flatbed for transporting vehicles equipped with at least two moving platforms that allow a more efficient arrangement of the vehicles and a greater loading capacity with respect to prior art flatbeds having similar lengths and widths.

The above and other objects and advantages of the invention, as will appear from the following description, are obtained with a loading flatbed for transporting vehicles as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described without departing from the scope of the invention as appears from the enclosed claims.

The present invention will be better described by some preferred embodiments thereof, provided as a nonlimiting example, with reference to the enclosed drawings, in which:
- Figure 1 shows a side view of a semitrailer equipped with a flatbed for transporting vehicles according to the present invention loaded with cars;
- Figure 2 shows a top perspective view of a preferred embodiment of the loading flatbed for transporting vehicles according to the present invention in a firts configuration of use thereof;
- Figure 3 is a side view of the loading flatbed for transporting vehicles according to the present invention in the configuration of use of Figure 2;
- Figure 4 shows a top perspective view of a preferred embodiment of the loading flatbed for transporting vehicles according to the present invention in a second configuration of use thereof;
- Figure 5 is a side view of the loading flatbed for transporting vehicles according to the present invention in the configuration of use of Figure 4;
- Figure 6 shows a top perspective view of a preferred embodiment of the loading flatbed for transporting vehicles according to the present invention in a third configuration of use thereof; and
- Figure 7 is a side view of the loading flatbed for transporting vehicles according to the present invention in the configuration of use of Figure 6.

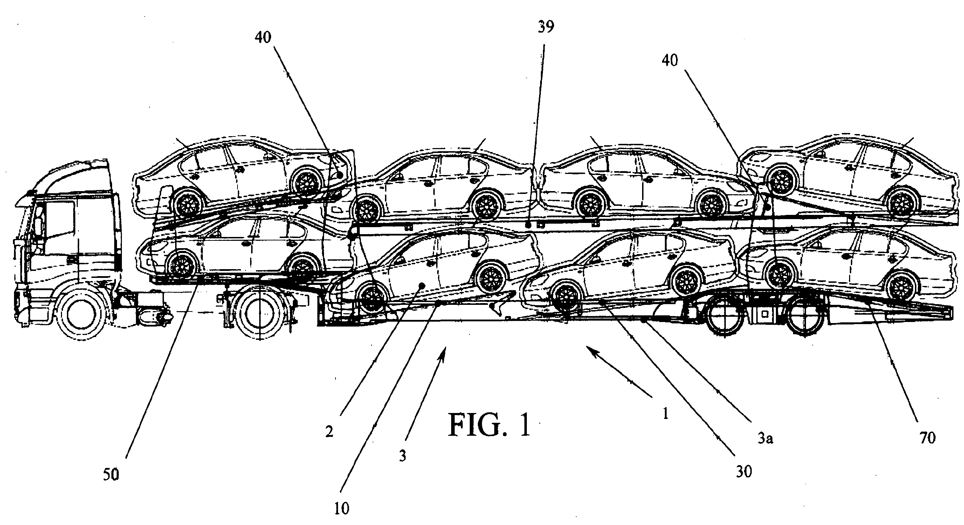

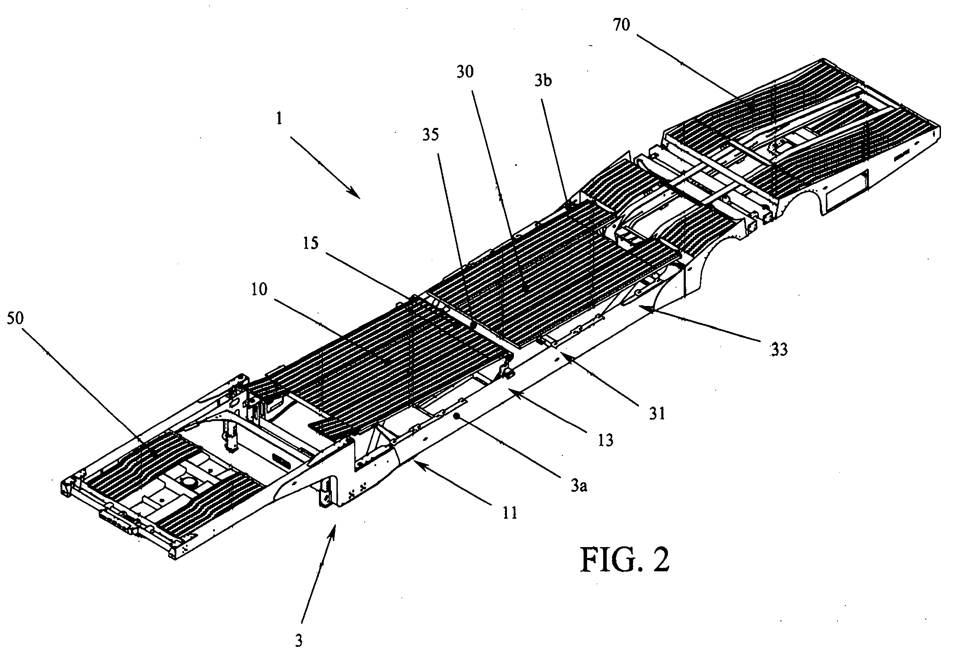

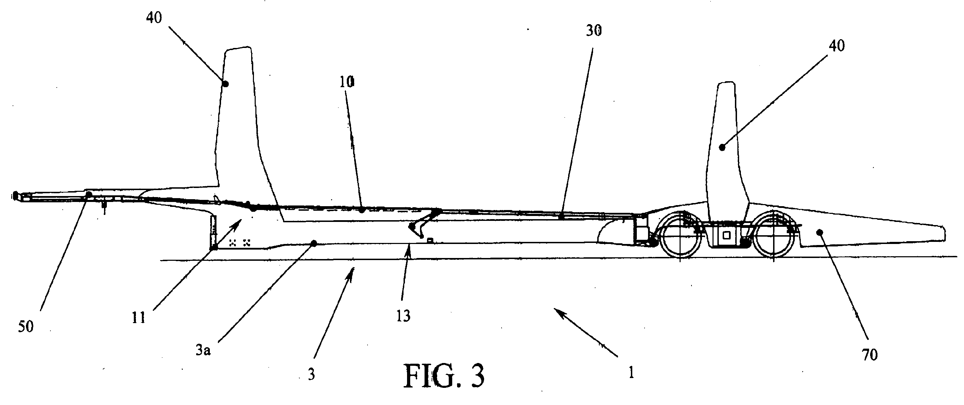

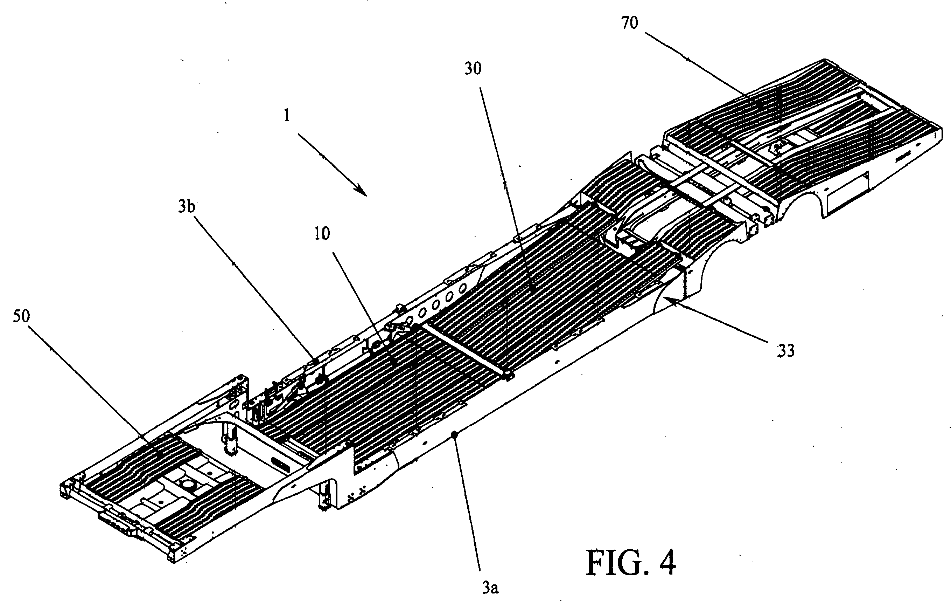

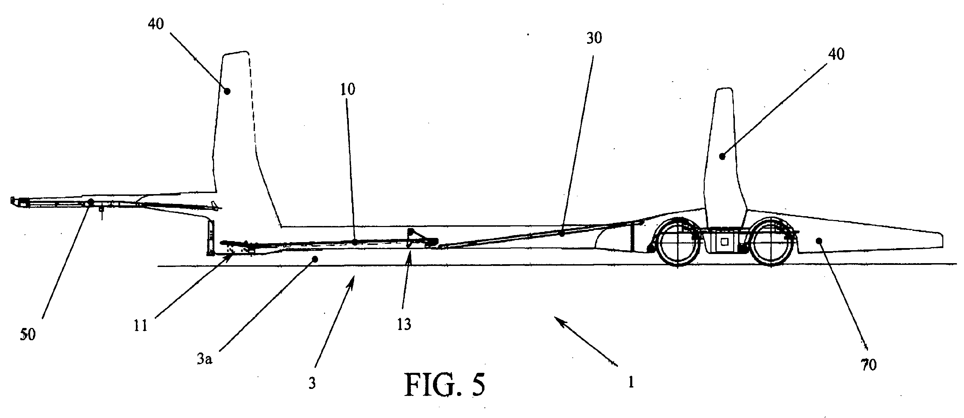

With reference to the Figures, it is possible to note that the loading flatbed 1 according to the present invention for transporting vehicles 2 in a line comprises at least one perimeter chassis 3 composed of at least two side longitudinal members 3a, 3b, such side longitudinal members 3a, 3b being separated by interposing at least one first loading platform 10 and at least one second loading platform 30, such first loading platform 10 and such second loading platform 30 being adapted to be lifted, lowered and inclined one with respect to the other through related actuating means, such actuating means being adapted to take such first platform 10 at least between a rear inclined position (Figures 2 and 3), a lowered and planar position (Figures 4 and 5) and a lowered and front inclided position (Figures 1, 6 and 7) and vice versa, and to take such second platform 30 at least between a rear inclined position (Figures 2 and 3) and a front inclined position (Figures 1 and 4 to 7), and vice versa.

Preferably, for each one of such platforms 10, 30, such actuating means comprise at least front actuating means, respectively 11 and 31, and at least rear actuating means, respectively 13 and 33, such front means 11 and rear means 13 cooperating to take such first platform 10 at least from such rear inclined position, such lowered and planar position and such lowered and front inclined position and vice versa, and such front means 31 and rear means 33 cooperating to take such second platform 30 at least between such rear inclined position and such front inclined position and vice versa.

Preferably, such front actuating means 11, 31 are composed of handling levers and/or pistons, per se known in the art, and such rear actuating means 13, 33 are composed of handling levers and/or pistons, also per se known in the art.

According to a variation of the flatbed 1 according to the present invention not completely shown in the Figures, it is possible to provide that at least the second platform 30 is free from the front actuating means, and in particular the handling levers, making such flatbed of a simpler and cheaper arrangement. Under such circumstance, it is therefore possible to provide that at least one rear part 15 of the first platform 10 and at least one front part 35 of the second platform 30 be equipped with mutual connecting means adapted to be unfastened: by thereby connecting the first platform 10 to the second platform 30 through such connecting means, it is possible to rear incline also such second platform 10 through the only action of the actuating means 11, 13 of such first platform 10. In order to be then able to front incline the second platform 30, it is enough to disengage the parts 15, 35 by unfastening the mutual connecting means.

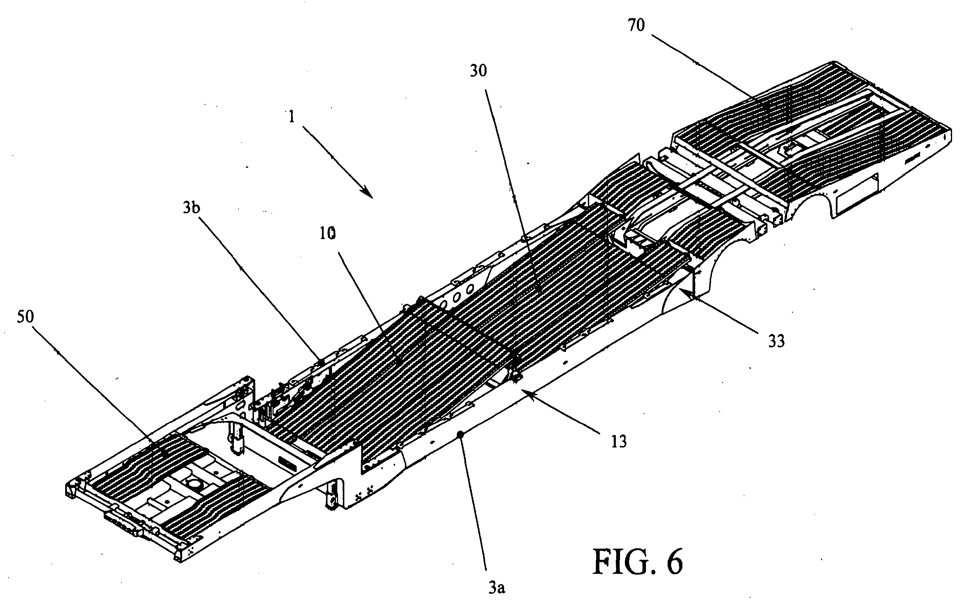

In order to allow keeping the height requirements imposed by the Rules of the Road, above all if the loading flatbed 1 according to the present invention is placed, as traditionally occurs in known transporting trucks, under at least one second loading flatbed 39, like those substantially known in the art, supported by suitable lateral risers 40, advantageously such loading platforms 10, 30 are handled by such actuating means 11, 13, 31, 33 in order to descend, at least partially, below the upper overall profile of such side longitudinal members 3a, 3b (as shown, for example, in Figures 4 and 6), consequently obtaining a substantial decrease of overall height sizes occupied by vehicles loaded onto the loading flatbed 1 according to the present invention, at least on such first and second platform 10, 30.

In case of particularly high vehicles, such as for example SUVs, it is possible to provide that also the second platform 30 can be taken by the respective cooperating means into at least one lowered and planar position: in such way, by taking both the first platform 10 and the second platform 30 into their respective lowered and planar, and eventually mutually co-planar positions, it is possible to obtain on the flatbed 1 according to the present invention a loading plane with a possible substantial decrease of overall height sizes of the vehicles.

Preferably, the first loading platform 10 and the second loading platform 30 are longitudinally adjacent. In addition, the loading flatbed 1 can comprise at least one third loading platform 50 arranged before the first loading platform 10, and at least one fourth loading platform 70 arranged behind the second loading platform 30.

With reference again to Figures 2 to 7, it is possibile to note the succession of some relative positions between the first and the second loading platform 10, 30, and possibly the third 50 and the fourth 70 loading platform, necessary for loading the vehicles of the flatbed 1 according to the present invention. Figures 2 and 3 in fact show the positioning of the platforms 10, 30 necessary for loading a vehicle onto such third platform 50: under such circumstance, both the first platform 10 and the second platform 30 are in the rear inclined position and mutually co-planar. Once having driven at least one vehicle onto the third platform 50, Figures 4 and 5 show the positioning of the platforms 10, 30 necessary for loading a vehicle onto such first platform 10: under such circumstance, the first platform 10 is in its lowered and planar position, while the second platform 30 is in its front inclined position; it can be noted how the lowered position of the first platform 10 allows placing, if necessary, at least one front part of the vehicle loaded onto such platform 10 below a possible rear part projecting from the previously loaded vehicle onto the third platform 50.

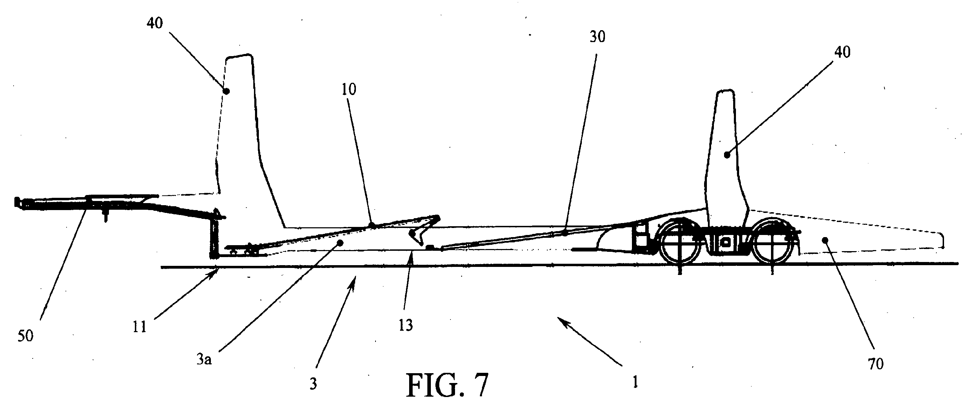

Once having driven at least one vehicle onto the first platform 10, Figures 6 and 7 show the positioning of the platforms 10, 30 necessary for loading a vehicle onto such second platform 30: under such circumstance, the first platform 10 is in its lowered and front inclined position, while the platform 30 remains in the front inclined position; it must be noted how the lowered and front inclined position of the first platform 10 allows placing, if necessary, at least one front part of the vehicle loaded onto the second platform 30 below a possible projecting rear part of the previously loaded vehicle onto the first platform 10.

Once having driven at least one vehicle onto the second platform 30, if necessary, it is possible to proceed with loading at least one vehicle onto such fourth platform 70 without the need of requiring further movements of the first 10 and the second 30 loading platform. Obviously, in order to proceed with unloading the vehicles from the loading flatbed 1 according to the present invention, it is enough to proceed in reverse with respect to what has been described above.

## Claims

1. Loading flatbed (1) for transporting vehicles (2) in a line, comprising at least one perimeter chassis (3) composed of at least two side longitudinal members (3a, 3b), said side longitudinal members (3a, 3b) being separated by interposing at least one first loading platform (10) and at least one second loading platform (30), said first loading platform (10) and said second loading platform (30) being adapted to be lifted, lowered and inclined one with respect to the other through related actuating means, said loading flatbed (1) further comprising at least one third loading platform (50) arranged before said first loading platform (10) and at least one fourth loading platform (70) arranged behind said second loading platform (30), **characterized in that** said actuating means are adapted to take said first platform (10) at least between a rear inclined position, a lowered and planar position and a lowered and front inclined position and vice versa, and to take said second platform (30) at least between a rear inclined position and a front inclined position, and vice versa, wherein relative positions between the first and the second loading platforms (10, 30), and the third and the fourth loading platforms (50, 70), necessary for loading the vehicles on the flatbed (1) are as follows: when it is necessary to load a vehicle onto the third platform (50), both the first platform (10) and the second platform (30) are in the rear inclined position and mutually co-planar; when at least one vehicle has been driven onto the third platform (50) and has to be loaded onto the first platform (10), the first platform (10) is in its lowered and planar position, while the second platform (30) is in its front inclined position, the lowered position of the first platform (10) allowing to place at least one front part of the vehicle loaded onto such platform (10) below a possible rear part projecting from the previously loaded vehicle onto the third platform (50); when at least one vehicle has been driven onto the first platform (10), if a vehicle has to be loaded onto the second platform (30), the first platform 10 is in its lowered and front inclined position, while the platform 30 remains in the front inclined position, the lowered and front inclined position of the first platform (10) allowing to place at least one front part of the vehicle loaded onto the second platform (30) below a possible projecting rear part of the previously loaded vehicle onto the first platform (10); when at least one vehicle has been driven onto the second platform (30) at least one vehicle is loaded onto the fourth platform (70) without the need of requiring further movements of the first and the second loading platform (10, 30).

2. Loading flatbed (1) according to claim 1, **characterised in that** said actuating means are adapted to take said second platform (30) also in a lowered and planar, and preferably co-planar position with said lowered and planar position of said first platform (10).

3. Loading flatbed (1) according to claim 1, **characterised in that**, for each one of said platforms (10, 30), said actuating means comprise at least front actuating means (11, 31) and at least rear actuating means (13, 33), said front means (11) and said rear means (13) cooperating in order to take said first platform (10) at least between said rear inclined position, said lowered and planar position and said lowered and front inclined position and vice versa, and said front means (31) and said rear means (33) cooperating in order to take said second platform (30) at least between said rear inclined position and said front inclined position and vice versa.

4. Loading flatbed (1) according to claim 2, **characterised in that** said front means (31) and said rear means (33) are cooperating in order to take said second platform (30) also in said lowered and planar position.

5. Loading flatbed (1) according to claim 3, **characterised in that** said front actuating means (11, 31) are composed of handling levers and/or pistons and said rear actuating means (13, 33) are composed of handling levers and/or pistons.

6. Loading flatbed (1) according to claim 1, **characterised in that** at least one rear part (15) of said first platform (10) and at least one front part (35) of said second platform (30) are equipped with mutual connecting means adapted to be unfastened.

7. Loading flatbed (1) according to claim 1, **characterised in that** said loading platforms (10, 30) are handled by said actuating means in order to descend at least partially below an upper overall profile of said side longitudinal members (3a, 3b).

8. Loading flatbed (1) according to claim 1, **characterised in that** said first loading platform (10) and said second loading platform (30) are longitudinally adjacent.

## Patentansprüche

1. Ladeboden (1) für den Transport von Fahrzeugen (2) in Reihe, der zumindest einen umlaufenden Rahmen (3) umfasst, der aus wenigstens zwei seitlichen Langträgern (3a, 3b) besteht; die besagten, seitlichen Längsträger (3a, 3b) sind durch die Zwischenlage von wenigstens einer ersten Ladefläche (10) und einer zweiten Ladefläche (30) getrennt, wobei die besagte, erste Ladefläche (10) und die besagte, zweite Ladefläche (30) durch entsprechende Antriebe zueinander angehoben, gesenkt und geneigt werden können, wobei die besagte Ladefläche (1) zumindest eine dritte Ladefläche (50) vor der besagten ersten Ladefläche (10) und zumindest eine vierte Ladefläche (70) nach der besagten zweiten Ladefläche (30) umfasst, **gekennzeichnet durch** die Tatsache, dass die besagten Antriebe in der Lage sind, die besagte, erste Ladefläche (10) zumindest in eine rückwärts geneigte Position, eine gesenkte und plane Position, und eine gesenkte und nach vorn geneigte Position zu bringen und umgekehrt, die besagte zweite Ladefläche (30) in eine rückwärts geneigte und eine vorn geneigte Position und umgekehrt, wobei die Positionen zwischen der ersten und zweiten Ladefläche (10, 30), und der dritten und vierten Ladefläche (50, 70), die für die Ladung der Fahrzeuge auf die Ladeflächen notwendig sind (1), wie folgt lauten: Wenn ein Fahrzeug auf die dritte Ladefläche (50) geladen werden soll, muss sich sowohl die erste Ladefläche (10) als die zweite (30) in einer rückwärts geneigten Position komplanär zueinander befinden; nachdem wenigstens ein Fahrzeug auf die dritte Ladefläche (50) gefahren wurde und auf die erste Ladefläche (10) geladen werden soll, muss sich die erste Ladefläche (10) in gesenkter und planer Position befinden, die zweite Ladefläche (30) dagegen befindet sich in der vorn geneigten Position, die gesenkte Position der ersten Ladefläche (10) ermöglicht die Anordnung wenigstens des vorderen Teils des auf diese Ladefläche (10) geladenen Fahrzeugs unter dem eventuell hervorragenden Heck eines Fahrzeugs, das zuvor auf die dritte Ladefläche (50) gefahren wurde; wenn zumindest ein Fahrzeug auf die erste Ladefläche (10) gefahren wurde, und es soll ein Fahrzeug auf die zweite Ladefläche (30) geladen werden, befindet sich die erste Ladefläche (10) in gesenkter und nach vorn geneigter Position, während die Ladefläche (30) in der vorn geneigten Position verbleibt, die gesenkte und vorn geneigte, erste Ladefläche (10) ermöglicht die Anordnung wenigstens des Frontteils des auf die zweite Ladefläche (30) geladenen Fahrzeugs unter einem eventuell hervorragenden Heck des Fahrzeugs, das zuvor auf die erste Ladefläche (10) geladen wurde; wenn zumindest ein Fahrzeug auf die zweite Ladefläche (30) gefahren wurde, kann zumindest ein Fahrzeug auf die vierte Ladefläche (70) geladen werden, ohne dass weitere Verlagerungen der ersten und zweiten Ladefläche (10, 30) notwendig sind.

2. Ladefläche (1) gemäß dem Patentanspruch 1, **gekennzeichnet durch** die Tatsache, dass die besagten Antriebe in der Lage sind, auch die besagte, zweite Ladefläche (30) in eine gesenkte und plane, in bevorzugter Weise komplanäre Position gegenüber der besagten, gesenkten und planen Position der besagten, ersten Ladefläche (10) zu fahren.

3. Ladefläche (1) gemäß dem Patentanspruch 1, **gekennzeichnet durch** die Tatsache, dass für jede der besagten Ladeflächen (10, 30) die besagten Antriebe wenigstens vordere Antriebe (11, 31) und wenigstens rückwärtige Antriebe (13, 33) umfassen, dass die besagten vorderen (11) und rückwärtigen (13) Antriebe zusammenarbeiten, um die besagte, erste Ladefläche (10) zumindest zwischen die besagte, hinten geneigte Position, die besagte gesenkte und plane Position, und die besagte, gesenkte und vorn geneigte Position zu bringen und umgekehrt, und dass die besagten, vorderen (31) und hinteren (33) Antriebe zusammen wirken, um die besagte, zweite Ladefläche (30) wenigstens zwischen die besagte, hinten geneigte Position und die besagte vorn geneigte Position zu bringen, und umgekehrt.

4. Ladefläche (1) gemäß dem Patentanspruch 2, **gekennzeichnet durch** die Tatsache, dass die besagten, vorderen (31) und hinteren Antriebe (33) zusammen wirken, um die besagte, zweite Ladefläche (30) auch in die besagte, gesenkte und plane Position zu bringen.

5. Ladefläche (1) gemäß dem Patentanspruch 3, **gekennzeichnet durch** die Tatsache, dass die besagten, vorderen Antriebe (11, 31) aus Hebeln für ihre Betätigung und/oder Kolben bestehen und die besagten, hinteren Antriebe (13, 33) aus Betätigungshebeln und/oder Kolben.

6. Ladefläche (1) gemäß dem Patentanspruch 1, **gekennzeichnet durch** die Tatsache, dass zumindest ein hinterer Teil (15) der besagten, ersten Ladefläche (10) und wenigstens ein vorderer Teil (35) der besagten, zweiten Ladefläche (30) mit aushakbaren Mitteln für die gegenseitige Verbindung ausgerüstet sind.

7. Ladefläche (1) gemäß dem Patentanspruch 1, **gekennzeichnet durch** die Tatsache, dass die besagten Ladeflächen (10, 30) von den besagten Antrieben bewegt werden können, um wenigstens zum Teil unter ein oberes Raumbedarfprofil der besagten, seitlichen Längsträger (3a, 3b) zu fahren.

8. Ladefläche (1) gemäß dem Patentanspruch 1, **gekennzeichnet durch** die Tatsache, dass die besagte, erste Ladefläche (10) und die besagte, zweite Ladefläche (30) in Längsrichtung nebeneinander liegen.

## Revendications

1. Plateau de chargement (1) pour le transport de véhicules (2) en ligne, comprenant au moins un châssis périmétrique (3) composé au moins de deux longerons latéraux (3a, 3b) ; ces longerons latéraux (3a, 3b) sont séparés par l'interposition d'au moins une première plateforme de chargement (10) et au moins une seconde plateforme de chargement (30) ; la première plateforme de chargement (10) et la seconde plateforme de chargement (30) peuvent être soulevées, baissées, inclinées l'une par rapport à l'autre à l'aide de moyens actionneurs relatifs ; le plateau de chargement (1) comprend en outre une troisième plateforme de chargement (50) placée avant la première plateforme de chargement (10) et au moins une quatrième plateforme de chargement (70) placée derrière la seconde plateforme de chargement (30), **caractérisé en ce que** les moyens actionneurs sont appropriés pour placer la première plateforme (10) au moins entre une position inclinée à l'arrière, une position abaissée et planaire et une position abaissée et inclinée à l'avant et inversement, et à placer la seconde plateforme (30) au moins entre une position inclinée à l'arrière et une position inclinée à l'avant et inversement, où les positions relatives entre la première et la seconde plateforme de chargement (10, 30), et la troisième et la quatrième plateforme de chargement (50, 70), nécessaires pour charger les véhicules sur le plateau (1), sont les suivantes : quand il est nécessaire de charger un véhicule sur la troisième plateforme (50), aussi bien la première plateforme (10) que la seconde plateforme (30) se trouvent en position inclinée à l'arrière et sont réciproquement coplanaires ; quand au moins un véhicule a été guidé sur la troisième plateforme (50) et doit être chargé sur la première plateforme (10), la première plateforme (10) se trouve sur sa position abaissée et planaire, tandis que la seconde plateforme (30) se trouve en position inclinée à l'avant, la position abaissée de la première plateforme (10) permet de placer au moins une partie avant du véhicule chargé sur la plateforme (10) au-dessous d'une éventuelle partie arrière saillante du véhicule chargé précédemment sur la troisième plateforme (50) ; quand au moins un véhicule a été guidé sur la première plateforme (10), si un véhicule doit être chargé sur la seconde plateforme (30), la première plateforme (10) se trouve en position abaissée et inclinée à l'avant, tandis que la plateforme (30) reste en position inclinée à l'avant, la position abaissée et inclinée à l'avant de la première plateforme (10) permet de placer au moins une partie avant du véhicule chargé sur la seconde plateforme (30) au-dessous d'une éventuelle partie arrière saillante du véhicule chargé précédemment sur la première plateforme (10) ; quand au moins un véhicule a été guidé sur la seconde plateforme (30), au moins un véhicule est chargé sur la quatrième plateforme (70) sans besoin d'autres mouvements de la première et de la seconde plateforme de chargement (10, 30).

2. Plateau de chargement (1), selon la revendication 1, **caractérisé en ce que** les moyens actionneurs sont en mesure de mettre la seconde plateforme (30) même en position abaissée et planaire et de préférence coplanaire à la position abaissée et planaire de la première plateforme (10).

3. Plateau de chargement (1), selon la revendication 1, **caractérisé en ce que**, pour chaque plateforme (10, 30), ces moyens actionneurs comprennent au moins des moyens actionneurs avant (11, 31) et au moins des moyens actionneurs arrière (13, 33), ces moyens avant (11) et arrière (13) coopèrent pour placer la première plateforme (10) au moins entre la position inclinée à l'arrière, la position abaissée et planaire et la position abaissée et inclinée à l'avant et inversement, et ces moyens avant (31) et arrière (33) coopèrent pour placer la seconde plateforme (30) au moins entre la position inclinée à l'arrière et la position inclinée à l'avant et inversement.

4. Plateau de chargement (1), selon la revendication 2, **caractérisé en ce que** les moyens avant (31) et arrière (33) coopèrent pour placer la seconde plateforme (30) même en position abaissée et planaire.

5. Plateau de chargement (1), selon la revendication 3, **caractérisé en ce que** les moyens actionneurs avant (11, 31) sont composés de leviers de mise en mouvement et/ou de pistons et les moyens actionneurs arrière (13, 33) sont composés de leviers de mise en mouvement et/ou pistons.

6. Plateau de chargement (1), selon la revendication 1, **caractérisé en ce que** une partie arrière (15) de la première plateforme (10) et au moins une partie avant (35) de la seconde plateforme (30) sont dotées de moyens réciproques de connexion détachables.

7. Plateau de chargement (1), selon la revendication 1, **caractérisé en ce que** les plateformes de chargement (10, 30) sont mises en mouvement par ces moyens actionneurs pour descendre au moins partiellement sous un profil d'encombrement supérieur des longerons latéraux (3a, 3b).

8. Plateau de chargement (1), selon la revendication 1, **caractérisé en ce que** la première plateforme de chargement (10) et la seconde plateforme de chargement (30) sont longitudinalement adjacentes.
